# FASCICULE DE BREVET EUROPEEN

(11) **EP 3 662 186 B1**
(45) Date de publication et mention de la délivrance du brevet: **30.08.2023**
(21) Numéro de dépôt: 18745950.8
(22) Date de dépôt: 30.07.2018
(51) Int. Cl.: F16L 11/12, D03D 1/00, D03D 3/02, D03D 15/56

(54) **TUYAU AVEC COUCHE DE RENFORT**
ROHR MIT VERSTÄRKUNGSSCHICHT
TUBE WITH REINFORCEMENT LAYER

(30) Priorité: 31.07.2017 FR 1757308
(43) Date de publication de la demande: 10.06.2020
(60) Demande divisionnaire: 23182721.3
(73) Titulaire: Exel Industries, 51200 Epernay (FR)
(72) Inventeur: IACIOFANO, Nick, 75009 PARIS (FR); LORD, David, 75009 PARIS (FR)
(74) Mandataire: CSY London
(86) Numéro de dépôt international: PCT/EP2018/070560
(87) Numéro de publication internationale: WO 2019/025347

(56) Documents cités:
- EP-A1- 0 510 784
- WO-A1-2015/177664
- WO-A1-2016/098063
- WO-A1-2017/187233
- DE-U1-202014 004 448
- JP-A- 2015 012 881
- US-A1- 2015 061 281

## Description

L'invention concerne un tuyau pour le passage d'un fluide, ledit tuyau comprenant une couche.

Par le mot «couche», il est compris que celle-ci peut faire partie d'une construction de tuyau, qu'il peut s'agir d'un tube, d'une couche d'un tube, d'une gaine, pliée ou soudée. Il peut y avoir plusieurs couches dans la construction du tuyau. Une couche peut être reliée à l'autre couche ou partiellement reliée à une autre couche, ou non reliée à une autre couche.

Les tuyaux destinés à être utilisés pour la circulation de fluide, tels que les tuyaux d'arrosage, peuvent nécessiter une très grande longueur qui augmente d'autant le poids du tuyau lorsque celui-ci doit être enroulé et remisé. Pour réduire le poids et l'encombrement du tuyau, il est connu qu'il existe des tuyaux avec des propriétés extensibles, grâce auxquelles le tuyau s'allonge et s'élargit lorsque de l'eau circule à l'intérieur. Cela garantit que le tuyau présente une longueur suffisante de tuyau et maintient un débit important, et se rétracte lorsque la circulation d'eau à l'intérieur est arrêtée. Le tuyau rétracté présente un poids et un encombrement réduits qui facilitent son transport et son rangement après utilisation.

Un tel tuyau comprend au moins une couche de matériau synthétique extensible et un renfort textile. L'inconvénient de ce tuyau est que le renfort textile utilisé, qui est un tricot, a tendance à s'étirer en diamètre, ce qui confère au tuyau une masse linéique importante.

DE 20 2014 004448 U1 décrit un tuyau comprenant un premier tube fait d'un matériau élastique et imperméable et un deuxième tube fait d'un matériau élastique et flexible. Le premier tube est situé à l'intérieur du deuxième tube. Le premier tube et le deuxième tube présentent des extrémités distales fixées les unes aux autres, et le deuxième tube est adapté pour se dilater longitudinalement et / ou transversalement lorsque le premier tube s'étend à l'intérieur du deuxième tube.

US 2015/061281 A1 décrit un ensemble de tuyaux expansibles axialement comprenant au moins un tuyau interne et un tuyau externe. Le tuyau interne est expansible axialement et radialement. Le tuyau externe n'est expansible que axialement. Le tuyau externe expansible axialement est utilisé pour envelopper le tuyau interne et limiter l'expansion radiale du tuyau interne expansible axialement et radialement dans une plage prédéterminée.

EP 0510 784 A1 décrit un tuyau pour revêtir des canalisations sous pression avec un tissu formé de fils et de trame en plastique et un revêtement d'un côté appliqué sur le tissu. Le tuyau est caractérisé en ce que l'extensibilité du tissu dans la direction transversale du tuyau est au moins un tiers plus élevé que dans sa direction longitudinale.

C'est à ces inconvénients qu'entend remédier l'invention en proposant un tuyau comprenant une couche de renfort.

A cet effet, l'invention concerne un tuyau pour le passage d'un fluide selon la revendication 1.

Selon des aspects avantageux mais non obligatoires de l'invention, une telle couche de renfort peut incorporer une ou plusieurs des caractéristiques suivantes, prises en considération selon toute combinaison techniquement admissible:
- La couche est composée de textile.
- La couche est composée d'un tissage centré sur un axe longitudinal, le tissage comprenant des éléments de trame qui s'alignent circonférentiellement autour de l'axe longitudinal et des éléments de chaîne s'alignant le long de l'axe longitudinal.
- Au moins l'un des éléments de chaîne est extensible.
- Le au moins un élément de chaîne extensible présente une capacité d'allongement comprise entre 10% et 50% de sa longueur initiale, et de préférence entre 25 et 50% de sa longueur initiale.
- Au moins l'un des éléments de chaîne est composé de nylon, d'élasthanne, de lycra.
- Les éléments de chaîne sont choisis parmi des fils, des fils guipés, des plis, des torons, des filaments.
- Les éléments de trame ne sont pas extensibles.
- La couche, en l'absence de pression, est ondulée autour de la couche interne.
- Les couches interne et/ou externe sont composées de SEBS ou de latex ou de TPE.

L'invention sera mieux comprise et d'autres avantages de celle-ci apparaîtront plus clairement à la lumière de la description qui va suivre d'une couche de renfort et d'un tuyau conformes à son principe, faite à titre d'exemple non limitatif et en référence aux dessins annexés dans lesquels:
- La figure 1 est une vue en perspective d'une partie d'un tuyau non couvert par les revendications;
- La figure 2 est une vue à plus grande échelle du détail Il à la figure 1 d'une couche du tuyau de la figure 1 ;
- La figure 3 est une vue en perspective à une plus grande échelle du détail III de la figure 1 ;
- La figure 4 est une vue latérale du tuyau de la figure 1 dans un état rétracté;
- La figure 5 est une vue en coupe le long du plan V-V du tuyau de la figure 4 ;
- La figure 6 est une vue latérale du tuyau de la figure 4 sous pression ;
- La figure 7 est une vue en coupe le long du plan VII-VII du tuyau de la figure 6 ;
- La figure 8 est une vue en perspective d'une partie d'un autre tuyau non couvert par les revendications ;
- La figure 9 est une vue en perspective d'une partie d'un tuyau selon un mode de réalisation de l'invention ;
- La figure 10 est une vue à plus grande échelle du détail X illustré sur la figure 9.

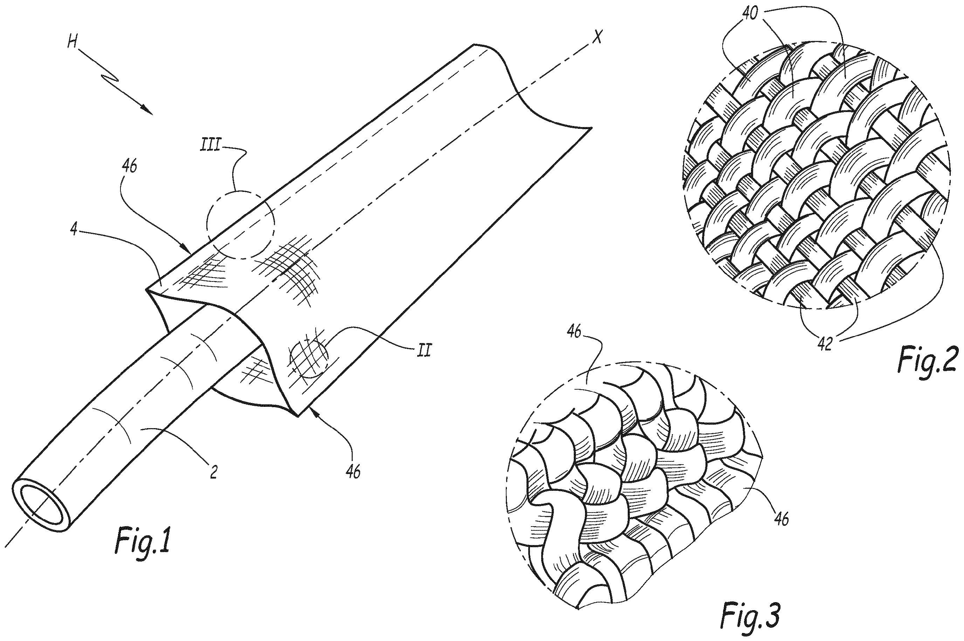

La figure 1 représente un tuyau H destiné à être utilisé pour la circulation de fluide, par exemple un tuyau d'arrosage. Le tuyau H comprend une couche 4 qui s'étend le long d'un axe longitudinal X. La couche 4 est disposée radialement autour d'une couche interne 2 du tuyau H. La couche interne 2 est composée d'un matériau extensible naturel tel que du caoutchouc, ou est réalisée en un matériau synthétique extensible, notamment en un matériau élastomère thermoplastique tel que le styrène-éthylène-butylène-styrène (SEBS).

La couche 4 est créée sous la forme d'une bande plate refermée sur sa longueur par solidarisation des bords longitudinaux 46, comme cela est représenté sur la figure 3. Par exemple, les bords 46 peuvent être cousus par couture, soudure, soudure par ultrasons, collage, etc. La bande plate peut être jointe bords-à-bords ou par recouvrement.

Par le mot « couche », il est compris que celle-ci peut être comme une gaine autour de la couche interne. Cette gaine peut être non reliée, reliée ou partiellement reliée à la couche interne ou à d'autres couches.

Selon un autre mode de réalisation qui n'est pas représenté, la couche 4 peut ne pas être un tissage, comme par exemple un filet, un matériau fibreux, un matériau tricoté, ou un autre matériau textile comprenant au moins un élément extensible s'étendant longitudinalement.

Selon un mode de réalisation, la couche 4 est composée de textile.

Comme on peut le voir sur la figure 2, la couche 4 réalisée en textile est composée d'un tissage qui comprend une chaîne composée d'éléments 40, qui s'étendent parallèlement à l'axe longitudinal X. Le tissage formant la couche 4 comprend également une trame composée d'éléments 42 qui sont positionnés de façon circonférentielle autour de l'axe longitudinal X.

Au moins un élément de chaîne 40 est extensible. Par extensible, on entend que cet élément de chaîne 40 a la possibilité d'être étiré en longueur et de revenir de façon réversible à sa longueur initiale ou nominale, c'est-à-dire sa longueur au repos, en l'absence d'efforts de traction. Par exemple, la possibilité d'allongement de l'élément de chaîne 40 peut être comprise entre 10% et 50% de sa longueur initiale, plus préférentiellement entre 25% et 50% de sa longueur initiale.

Les éléments de chaîne 40 peuvent être composés de fils, tels que cela est représenté dans l'exemple, ou bien de fils guipés, de mèches de fibres ou de nappes, ou de torons, entre autres.

Selon un exemple, la couche 4 peut comprendre des fils de chaîne extensibles 40.

Les éléments de trame 42 sont non extensibles. Par non extensibles, on entend que les éléments 42 qui constituent la trame ne peuvent pas être étirés en longueur, laquelle correspond à la direction circonférentielle du tuyau H. Par exemple, la possibilité d'allongement des éléments 42 peut être inférieure à 1% de leur longueur initiale.

Les éléments de trame 42 peuvent être choisis parmi des fils, des fils guipés, des plis, des torons, des filaments.

De façon optionnelle, au moins un élément de chaîne 40 est non extensible. Cela permet de contrôler l'allongement de la couche 4. La chaîne 40 peut comprendre au moins un élément extensible et au moins un élément non extensible, la longueur de l'élément non extensible étant d'une dimension similaire à la valeur d'allongement souhaitée de la couche 4.

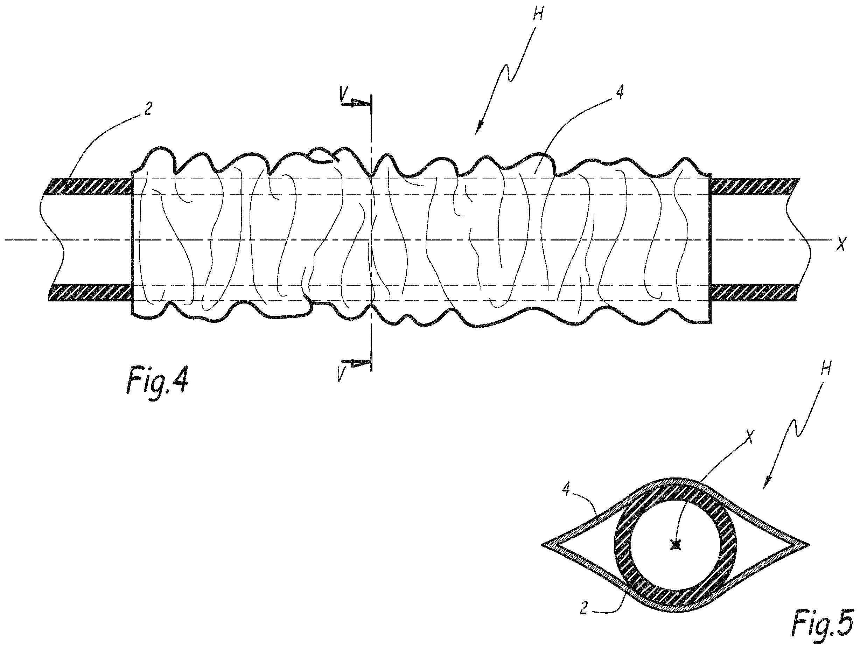

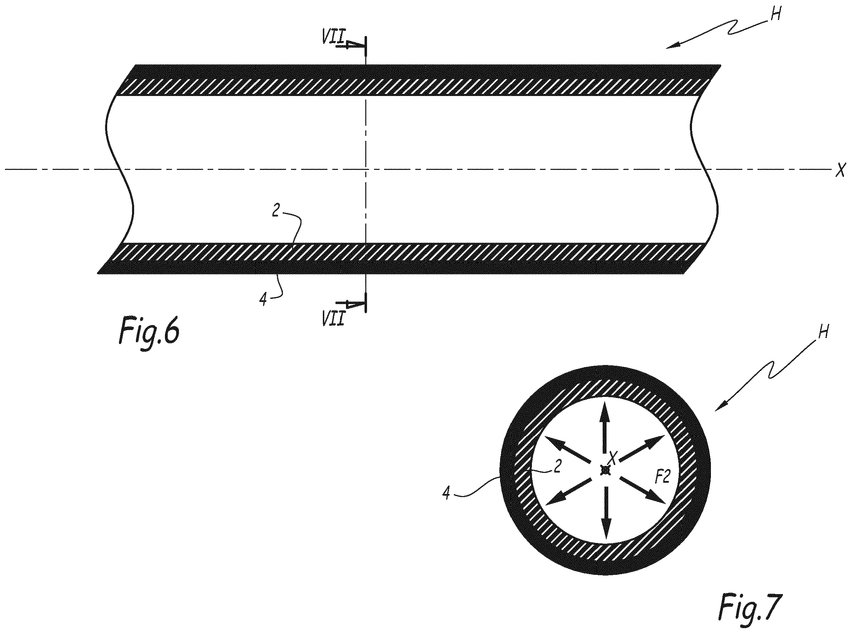

Au repos, ce qui signifie en l'absence de pression, la couche 4 est initialement rétractée. Le tuyau H est rétracté et présente une forme ondulée. Le terme « ondulée » signifie que la couche 4 se présente comme un « accordéon » autour de la couche interne 2, qui est droite (voir la figure 4). Sous l'action de la pression de l'eau qui allonge et agrandit la couche interne 2, comme cela est indiqué par les flèches F1 et F2 sur les figures 6 et 7, la couche 4 est déployée afin de s'étendre, avec une capacité d'allongement supplémentaire lorsque sa longueur maximale est atteinte, de façon à absorber des chocs potentiels à haute pression.

Les fils de chaîne 40 et les fils de trame 42 peuvent être tissés ensemble selon un motif alternatif, les fils de trame 42 passant alternativement au-dessus et en-dessous des fils de chaîne 40.

Au moins un élément extensible des éléments de chaîne 40 se compose d'au moins l'un de ce qui suit : de l'élasthanne, du lycra, du nylon.

Les propriétés élastiques du Nylon, de l'élasthanne ou du lycra permettent la rétraction du tuyau H en l'absence de pression exercée par un fluide et le retour de la couche 4 à sa longueur nominale.

Le Demandeur a découvert que le fil de nylon de la chaîne présentait l'avantage d'accroître la résistance à l'usure et, ainsi, la durée de vie du tuyau H en cas d'utilisation normale. Le terme « utilisation normale » désigne l'utilisation d'une pression d'eau domestique et, par exemple, d'une pression comprise entre 1 et 10 bar.

A titre d'exemple, le Nylon utilisé peut être d'une masse linéique comprise entre 200 et 800 deniers.

Le Demandeur estime que le tuyau H peut s'étendre jusqu'à 10% de sa longueur nominale ou plus pendant l'utilisation normale, en raison de l'extension de la couche 4.

En variante, les fils de chaîne 40 peuvent être réalisés en tout autre matériau synthétique extensible.

La nature élastique du SEBS permet l'allongement et la rétraction du tuyau H. Cette rétraction est favorisée par la nature élastique des fils de chaînes 40 en nylon, en élasthanne ou en lycra.

Selon un aspect optionnel de l'invention, les fils de chaîne 40 peuvent être guipés. Dans ce cas, les fils 40 comprennent une âme en élasthanne entourée d'une gaine pouvant être, par exemple, en matériau non extensible, tel que du polyéthylène téréphtalate (PET).

Les éléments de trame 42 non extensibles sont de préférence réalisées en PET et/ou en kevlar et/ou en aramide et/ou en polyamide et/ou en fibres biosourcées ou naturelles tel que des fibres de lin ou de chanvre. En variante, les éléments de trame 42 peuvent être également réalisés dans tout autre type de matériau non extensible. A titre d'exemple, les éléments de trame 42 peuvent avoir une masse linéique de 5500 décitex, ou bien une masse linéique comprise entre 700 et 900 deniers.

Les fils de chaine et/ou de trame peuvent être enrobés, par exemple de SEBS, ou de matériaux compatibles avec le SEBS, tels que des matériaux à base de styrène, d'éthylène ou de butylène de la famille des thermoplastiques élastomères styréniques (TPE-S) permettant de favoriser le collage avec une autre couche.

A titre d'exemple, la densité des éléments de trame 42 peut être comprise entre 50 et 60 éléments par pouce de longueur le long de l'axe longitudinal X.

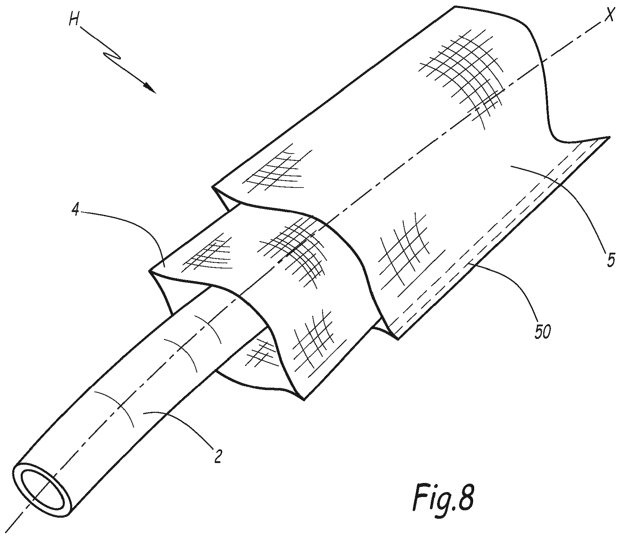

La figure 8 représente un tuyau qui diffère du tuyau de la figure 1 en ce qu'une couche externe 5 est ajoutée au tuyau H et entoure la couche 4. En particulier, cette couche 5 est une couche de protection en caoutchouc ou en SEBS, par exemple.

Comme cela est illustré, cette couche supplémentaire 5 est initialement une bande qui est ensuite pliée afin d'entourer la couche 4. La bande est fermée par une couture 50. D'autres moyens peuvent être utilisés pour fermer la bande.

Dans un tuyau particulier, cette couche supplémentaire 5 est non reliée à la couche 4 qu'elle entoure.

Dans d'autres tuyaux cette couche supplémentaire 5 est liée à la couche 4.

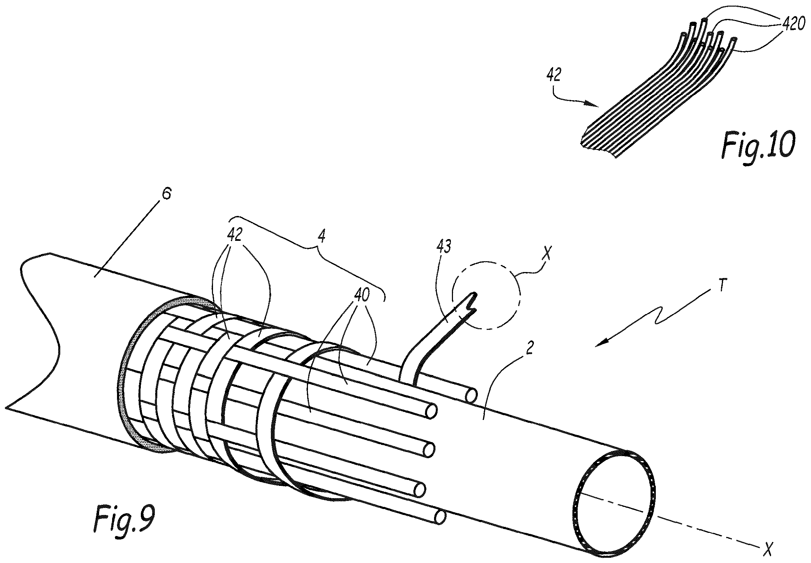

Un mode de réalisation de l'invention est représenté sur les figures 9 et 10. Dans ce mode de réalisation, les éléments communs au tuyau des figures 1-7 possèdent les mêmes références et fonctionnent de la même manière.

La figure 9 représente un tuyau T destiné à être utilisé pour la circulation de fluide, comme un tuyau d'arrosage. Comme dans le premier mode de réalisation, le tuyau T comprend une couche 4, ici appelée « couche de renfort », qui s'étend le long d'un axe longitudinal X. La couche de renfort 4 est disposée radialement entre une couche interne 2 et une couche externe 6 du tuyau T. La couche de renfort 4 entoure coaxialement la couche interne 2. La couche interne 2 et la couche externe 6 sont chacune réalisées en un matériau synthétique extensible, notamment en un matériau élastomère thermoplastique tel que le styrène-éthylène-butylène-styrène (SEBS).

La couche externe 6 donne son apparence extérieure au tuyau T et lui confère une résistance à l'abrasion et une surface externe lavable. L'épaisseur de la couche externe 6 peut être par exemple de l'ordre de 1 mm pour un tuyau d'un diamètre intérieur de 10,5 mm et d'un diamètre extérieur de 15 mm.

Dans l'exemple représenté, la couche de renfort 4, et le tuyau T dans sa globalité, ont une forme tubulaire centrée sur l'axe X. En variante non représentée, la couche de renfort 4 peut présenter une forme partiellement aplatie. Dans un tel cas, le tuyau T peut avoir, par exemple, une épaisseur de l'ordre de 6 mm et une largeur comprise entre 18 et 22 mm, la couche interne 2 et la couche externe 6 ayant une épaisseur de l'ordre de 2,25 mm.

De plus, les couches interne et externe 2 et 6 sont fusionnées ponctuellement avec un intervalle régulier sur toute la longueur du tuyau T. La fusion est réalisée par des orifices ponctuels 45 c'est-à-dire des ouvertures radiales, ménagées dans la couche de renfort 4, permettant au matériau des couches interne 2 et externe 6 de fusionner à travers les orifices pour former des liens de matière ponctuels entre la couche interne 2 et la couche externe 6. Cela permet d'éviter, en cas de rupture d'une portion de la couche interne 2, que cette portion ne se rétracte à l'intérieur de la couche de renfort 4 sans possibilité de récupération de celle-ci, alors que la couche externe 6, restant étirée, entraîne la détérioration définitive du tuyau T. En variante, l'intervalle selon lequel sont répartis les liens n'est pas forcément régulier.

En variante, ces fusions ponctuelles sont réalisées uniquement aux deux extrémités du tuyau T.

Dans l'exemple représenté sur les figures 9 et 10, les éléments de trame 42 sont des bandes. Par le terme « bandes », on entend que chaque bande de trame a une largeur, c'est-à-dire une dimension le long de l'axe longitudinal X, qui est supérieure à leur épaisseur dans la direction radiale du tuyau T. Les bandes constituant les éléments de trame 42 peuvent également être appelées rubans, ou mèches de fibres/nappes, ces termes revêtant les mêmes caractéristiques dimensionnelles de largeur et d'épaisseur.

Comme visible à la figure 10, les bandes 42 sont constituées d'une multitude de fils, ou de filaments, 420 groupés ensemble côte à côte et à plat.

Les éléments de trame 42 peuvent être composés également de fils, de fils guipés, ou de torons, entre autres.

Selon un mode de réalisation optionnel, les bandes 42 qui forment la trame sont constituées d'un seul ruban continu 43, représenté sur la figure 9, tissé de manière hélicoïdale avec les fils de chaîne 40. En d'autres termes, les bandes de trame 42 ne sont pas formées par des bandes indépendantes discontinues à chaque extrémité, comme cela est le cas sur une partie en tissu non cylindrique, mais par une seule bande continue enroulée autour de l'axe central X du tuyau T.

Le tuyau T est fabriqué selon un procédé comprenant les étapes successives consistant à : a) extruder la couche interne 2, b) à tisser la couche de renfort entourant la couche interne 2, et enfin c) à extruder la couche externe 6 autour de la couche de renfort 4.

La couche externe 6 adhère de préférence à la couche de renfort 4. Pour cela, les bandes 42 formant la trame sont structurées de façon à augmenter le coefficient de frottement entre la couche de renfort 4 et la couche externe 6. Cela peut être, par exemple, obtenu en choisissant les propriétés du PET constituant les bandes de trames 42, ou bien en adoptant un type de tissage particulier tel qu'une armure de type toile.

Avantageusement, la couche de renfort 4 et la couche externe 6 sont collées l'une à l'autre.

Selon un aspect optionnel de l'invention, le diamètre des fils de chaîne 40 peut être augmenté, notamment en augmentant la quantité d'élasthanne par longueur de fil, ce qui permet d'augmenter la possibilité d'allongement du tuyau T.

Selon un mode de réalisation non représenté de l'invention, les fils de trame 42 peuvent être formés par une bande torsadée. Dans un tel cas, le fluage des matériaux des couches interne et externe 2 et 6 à travers la couche de renfort 4 est favorisé.

Selon un aspect optionnel, la couche de renfort 4 peut être constituée d'un tissage double épaisseur, incluant une épaisseur interne extensible et une épaisseur externe jouant le rôle de couche de protection.

Selon un autre mode de réalisation non représenté, la couche externe 6 peut également être réalisée en textile et non en matériau synthétique extrudé. Par exemple, la couche externe textile peut revêtir l'aspect d'un manchon.

Selon un autre mode de réalisation non représenté, seule la couche interne 2 peut être solidarisée à la couche de renfort 4, ou bien seule la couche externe 6 peut être solidarisée à la couche de renfort 4.

Selon un autre mode de réalisation non représenté, la couche de renfort 4 peut ne pas être un tissage, par exemple un filet, un matériau fibreux, un tricot, ou un autre matériau textile comprenant au moins un élément extensible s'étendant longitudinalement.

De manière plus générale, la couche 4 a des capacités d'allongement plus importantes dans une direction que dans l'autre par rapport à l'axe longitudinal X. En d'autres termes, la couche de renfort 4 a la possibilité d'être étirée en longueur et de revenir de façon réversible à sa longueur initiale ou nominale, c'est-à-dire sa longueur au repos, en l'absence d'efforts de traction, plus importante dans l'une des directions longitudinale, le long de l'axe longitudinal X, et transversale, perpendiculairement à l'axe longitudinal X, que dans l'autre de ces directions.

Dans l'exemple représenté et de façon préférentielle, la couche de renfort 4 a une capacité d'allongement plus importante dans la direction longitudinale que dans la direction transversale c'est-à-dire la possibilité d'être étirée en longueur et de revenir de façon réversible à sa longueur initiale ou nominale, plus importante le long de l'axe longitudinal X que perpendiculairement à l'axe longitudinal X.

La couche de renfort 4 peut présenter une construction extensible, c'est-à-dire dont l'allongement différencié selon la direction est permis par sa structure et par la manière par laquelle elle est fabriquée à partir de la matière première. Il peut s'agir, par exemple, d'une construction à mailles, par exemple un filet, dont les mailles présentent des dimensions axiales différentes des dimensions transversales. Un tel filet peut être fabriqué par extrusion.

En variante, la couche de renfort 4 peut être réalisée en un matériau extensible, c'est-à-dire que l'allongement différencié selon la direction est permis par la composition du matériau utilisé pour sa fabrication. Dans ce cas, la couche de renfort peut être par exemple, un filet fabriqué en matériau élastique.

Selon un autre mode de réalisation non illustré, la couche 4 peut être composée d'un matériau maintenu en dimension en tissu tubulaire flexible souple.

Les caractéristiques des modes de réalisation et des variantes décrits ci-dessus peuvent être combinées afin de former de nouveaux modes de réalisation de l'invention, tant qu'ils sont couverts par les revendications.

## Revendications

1. Tuyau (T) pour le passage d'un fluide comprenant:
- une couche interne (2) en matériau extensible,
- une couche de renfort (4) entourant la couche interne (2), cette couche de renfort s'étendant autour d'un axe longitudinal (X) et présentant des capacités d'allongement plus importantes dans une direction que dans l'autre par rapport à l'axe longitudinal (X), et
- une couche externe (6) entourant la couche de renfort (4),
dans lequel la couche interne (2) et la couche externe (6) sont chacune réalisées en un matériau extensible, et la couche de renfort (4) comprend des orifices ponctuels à travers lesquels au matériau des couches interne et externe (2, 6) fusionnent, sur toute la longueur du tuyau, pour former des liens de matière ponctuels entre le couche interne (2) et la couche externe.

2. Tuyau selon la revendication 1, dans lequel la couche de renfort (4) présente des capacités d'allongement plus importantes dans la direction de l'axe longitudinal (X) que dans une direction perpendiculaire à l'axe longitudinal (X).

3. Tuyau selon la revendication 1 ou 2, dans lequel la couche de renfort (4) est composée de textile.

4. Tuyau selon la revendication 3, dans lequel la couche de renfort (4) est composée d'un tissage centré sur un axe longitudinal (X), le tissage comprenant des éléments de trame (42) qui s'alignent de manière circonférentielle autour de l'axe longitudinal (X) et des éléments de chaîne (40) qui s'alignent le long de l'axe longitudinal (X).

5. Tuyau selon la revendication 4, dans lequel au moins l'un des éléments de chaîne (40) est extensible.

6. Tuyau selon la revendication 5, dans lequel le au moins un élément extensible de la chaîne (40) présente une capacité d'allongement comprise entre 10% et 50% de sa longueur initiale, et de préférence entre 25 et 50% de sa longueur initiale.

7. Tuyau selon l'une quelconque des revendications 5 et 6, dans lequel le au moins l'un des éléments de la chaîne (40) est composé de nylon, d'élasthanne.

8. Tuyau selon l'une quelconque des revendications 4 à 7, dans lequel les éléments de chaîne (40) sont choisis parmi des fils, des fils guipés, des plis, des torons, des filaments.

9. Couche selon l'une quelconque des revendications 4 à 8, **caractérisée en ce que** les éléments de trame (42) sont non extensibles.

10. Tuyau selon l'une quelconque des revendications précédentes, dans lequel la couche de renfort (4), en l'absence de pression, est ondulée autour de la couche interne (2).

11. Tuyau selon l'une quelconque des revendications précédentes, dans lequel les couches interne (2) et/ou externe (6) sont composées de SEBS ou de latex ou de TPE.

## Patentansprüche

1. Schlauch (T) für das Hindurchströmen eines Fluids, der Folgendes umfasst:
- eine Innenschicht (2) aus dehnbarem Material,
- eine Verstärkungsschicht (4), die die Innenschicht (2) umgibt, wobei diese Verstärkungsschicht sich um eine Längsachse (X) erstreckt und in Bezug auf die Längsachse (X) in einer Richtung größere Dehnungsfähigkeiten besitzt als in der anderen Richtung, und
- eine Außenschicht (6), die die Verstärkungsschicht (4) umgibt,
wobei die Innenschicht (2) und die Außenschicht (6) jeweils aus einem dehnbaren Material hergestellt sind und die Verstärkungsschicht (4) punktförmige Öffnungen umfasst, über die ein Material der Innen- und der Außenschicht (2, 6) über die gesamte Länge des Schlauchs so verbunden ist, dass zwischen der Innenschicht (2) und der Außenschicht punktförmige Materialverbindungen gebildet sind.

2. Schlauch nach Anspruch 1, wobei die Verstärkungsschicht (4) Dehnungsfähigkeiten besitzt, die in Richtung der Längsachse (X) größer sind als in einer senkrecht zur Längsachse (X) verlaufenden Richtung.

3. Schlauch nach Anspruch 1 oder 2, wobei die Verstärkungsschicht (4) aus Webstoff besteht.

4. Schlauch nach Anspruch 3, wobei die Verstärkungsschicht (4) aus einem Gewebe besteht, das an der Längsachse (X) zentriert ist, wobei das Gewebe Schusselemente (42), die in Umfangsrichtung um die Längsachse (X) herum aneinandergereiht sind, und Kettelemente (40), die entlang der Längsachse (X) aneinandergereiht sind, umfasst.

5. Schlauch nach Anspruch 4, wobei mindestens eines der Kettelemente (40) dehnbar ist.

6. Schlauch nach Anspruch 5, wobei das mindestens eine dehnbare Element der Kette (40) eine Dehnungsfähigkeit zwischen 10% und 50% seiner ursprünglichen Länge und bevorzugt zwischen 25 und 50% seiner ursprünglichen Länge besitzt.

7. Schlauch nach einem der Ansprüche 5 und 6, wobei das mindestens eine der Elemente der Kette (40) aus Nylon, Elasthan besteht.

8. Schlauch nach einem der Ansprüche 4 bis 7, wobei die Kettelemente (40) unter Fäden, beschichteten Fäden, Lagen, Faserbündeln, Fasern ausgewählt sind.

9. Schicht nach einem der Ansprüche 4 bis 8, **dadurch gekennzeichnet, dass** die Schusselemente (42) nicht dehnbar sind.

10. Schlauch nach einem der vorhergehenden Ansprüche, wobei die Verstärkungsschicht (4) bei fehlendem Druck gewellt um die Innenschicht (2) herum liegt.

11. Schlauch nach einem der vorhergehenden Ansprüche, wobei die Innenschicht (2) und/oder die Außenschicht (6) aus SEBS oder Latex oder TPE bestehen.

## Claims

1. Tube (T) for the passage of a fluid, comprising:
- an inner layer (2) of extendible material,
- a reinforcing layer (4) surrounding the inner layer (2), this reinforcing layer extending about a longitudinal axis (X) and having greater elongation capabilities in one direction than in the other with respect to the longitudinal axis (X), and
- an outer layer (6) surrounding the reinforcing layer (4),
wherein the inner layer (2) and the outer layer (6) are each produced from an extendible material, and the reinforcing layer (4) comprises punctiform orifices through which a material of the inner and outer layers (2, 6) merge, over the whole length of the tube, to form punctiform material links between the inner layer (2) and the outer layer.

2. Tube as claimed in claim 1, wherein the reinforcing layer (4) has elongation capabilities which are greater in the direction of the longitudinal axis (X) than in a direction perpendicular to the longitudinal axis (X).

3. Tube as claimed in claim 1 or 2, wherein the reinforcing layer (4) is composed of textile.

4. Tube as claimed in claim 3, wherein the reinforcing layer (4) is composed of a woven fabric centred on the longitudinal axis (X), the woven fabric comprising weft elements (42) which are aligned circumferentially about the longitudinal axis (X) and warp elements (40) which are aligned along the longitudinal axis (X).

5. Tube as claimed in claim 4, wherein at least one of the warp elements (40) is extendible.

6. Tube as claimed in claim 5, wherein the at least one extendible element of the warp (40) has an elongation capability between 10% and 50% of its initial length, and preferably between 25 and 50% of its initial length.

7. Tube as claimed in any one of claims 5 and 6, wherein the at least one of the elements of the warp (40) is composed of nylon, elastane.

8. Tube as claimed in any one of claims 4 to 7, wherein the warp elements (40) are selected from threads, covered threads, plies, strands, filaments.

9. Layer as claimed in any one of claims 4 to 8, **characterised in that** the weft elements (42) are non-extendible.

10. Tube as claimed in any one of the preceding claims, wherein the reinforcing layer (4), in the absence of pressure, lies around the internal layer (2) in an undulating manner.

11. Tube as claimed in any one of the preceding claims, wherein the inner (2) and/or outer (6) layers are composed of SEBS or of latex or of TPE.
